# EUROPÄISCHE PATENTSCHRIFT

(11) **EP 2 531 282 B1**
(45) Veröffentlichungstag und Bekanntmachung des Hinweises auf die Patenterteilung: **23.10.2013**
(21) Anmeldenummer: 11701228.6
(22) Anmeldetag: 19.01.2011
(51) Int. Cl.: B01D 71/06, C08J 9/28

(54) **VERFAHREN ZUR HERSTELLUNG PORÖSER SILICONFORMKÖRPER**
METHOD FOR PRODUCING POROUS SILICON MOLDED BODIES
PROCÉDÉ DE FABRICATION DE CORPS MOULÉS POREUX EN SILICONE

(30) Priorität: 02.02.2010 DE 102010001482
(43) Veröffentlichungstag der Anmeldung: 12.12.2012
(73) Patentinhaber: Wacker Chemie AG, 81737 München (DE)
(72) Erfinder: HOELZL, Manfred, 84489 Burghausen (DE); KIRSCHBAUM, Frauke, 80995 München (DE); MAURER, Robert, 81373 München (DE); PFEIFFER, Jürgen, 84561 Mehring (DE); WIERER, Konrad Alfons, 84489 Burghausen (DE)
(74) Vertreter: Fritz, Helmut
(86) Internationale Anmeldenummer: PCT/EP2011/050659
(87) Internationale Veröffentlichungsnummer: WO 2011/095393

(56) Entgegenhaltungen:
- WO-A1-98/25982
- JP-A- 59 225 703
- US-A1- 2005 075 408

## Beschreibung

Die Erfindung betrifft ein Verfahren zur Herstellung poröser Siliconformkörper, sowie die damit erhältlichen Formkörper und deren Verwendung.

Poröse Siliconformkörper werden in vielen Bereichen eingesetzt, z.B. als Abdichtungsmaterial im Fahrzeugbau oder als Isoliermaterial in der Bauindustrie. Ein Formteil ist ein dreidimensionales Gebilde, vorzugsweise eine Folie oder eine Faser, wobei die Dicke des Formteils normalerweise 10 mm nicht übersteigt.

Die Herstellung von porösen Silicon-Formkörpern erfolgt üblicherweise mit 2-Komponenten-Systemen aus einem Hydrogenmethylpolysiloxan und einem Vinylpolysiloxan. Durch die Zugabe einer Hydroxidquelle entsteht Wasserstoff, welcher zur eigentlichen Aufschäumung führt. Ein derartiges Verfahren wird z.B. in DE 1224040 beschrieben.

Auf diese Weise werden meistens dicke poröse Siliconformkörper mit offener oder geschlossener Zellstruktur hergestellt.

Für die Herstellung dünner poröser Siliconformkörper, z.B. Membranen, ist diese Herstellungsmethode allerdings nicht geeignet.

Membranen sind dünne poröse Formkörper und finden Anwendung zur Trennung von Gemischen. Eine weitere Anwendung ergibt sich im Textilbereich, z.B. als atmungsaktive und wasserabweisende Membran. Ein Vorteil von Membran-Trennverfahren ist, dass sie auch bei niedrigen Temperaturen, wie beispielsweise bei Raumtemperatur, durchgeführt werden können und somit im Vergleich zu thermischen Trennverfahren, wie Destillation, energetisch weniger aufwändig sind.

Ein bekannter Prozess für die Verarbeitung von Celluloseacetat oder Polyvinylidenfluorid zu dünnen porösen Formkörpern ist die Phaseninversion durch Verdampfen. Ein Fällmedium oder eine zusätzliche Aufschäumreaktion wird dabei nicht benötigt. Im einfachsten Fall wird eine ternäre Mischung aus einem Polymer, einem leicht flüchtigen Lösungsmittel und einem zweiten schwerer flüchtigen Lösungsmittel hergestellt. Nach der Nassfilmbildung verdampft das flüchtige Lösungsmittel, was dazu führt, dass das Polymer in dem zweiten Lösungsmittel ausfällt und eine poröse Struktur ausbildet. Die Poren sind mit dem zweiten Lösungsmittel gefüllt. Das zweite Lösungsmittel wird danach aus dem Formteil entfernt, z.B. durch Auswaschen oder Abdampfen, und man erhält letztlich ein poröses Formteil. Beispielsweise ist in EP 363364 die Herstellung von porösen PVDF-Formkörpern aufbauend auf diesem Herstellungsprozess beschrieben.

Die Verwendung dieses Prozesses für Silicone ist dem Fachmann nicht geläufig, da normalerweise, falls sich tatsächlich Poren beim Verdampfen ausbilden, diese aufgrund der noch vorhandenen Fließfähigkeit des Silicons in sich zusammensacken und damit der Formkörper seine Porosität verliert.

Die Herstellung poröser Silicon-Formkörper nach dem Loeb-Sourirajan-Verfahren ist bekannt. So wird z.B. in JP 59225703 die Herstellung einer porösen Silicon-Membran aus einem Silicon-Carbonat-Copolymer gelehrt.Durch dieses Verfahren wird ausschließlich eine anisotrope Porengröße entlang der Filmschichtdicke erhalten. Daneben benötigt man dabei auch immer ein separates Fällungsbad.

Dabei wäre es vorteilhaft, neben den in dieser Patentschrift erwähnten Silicon-Copolymeren noch weitere Silicone bzw. Silicon-Copolymere für die Herstellung dünner poröser Formkörper einsetzen zu können. Die Herstellung isotroper poröser Siliconformkörper wäre ebenfalls vorteilhaft.

Die Druckschrift US 2005/0075408 beschreibt ein Verfahren zur Herstellung poröser Formkörper aus organopolysiloxan/Polyurethan-Copolymeren.

Es bestand daher die Aufgabe einen Prozess zu entwickeln, mit dem sich dünne poröse Siliconformkörper auf eine technisch sehr einfache Weise herstellen lassen, der allerdings die Nachteile der bisher bekannten Herstellungsprozesse nicht mehr aufweist und der es ermöglicht, Silicone sowie Silicon-Copolymere einzusetzen, sowie einfach und wirtschaftlich durchzuführen ist.

Gegenstand der Erfindung ist ein Verfahren zur Herstellung dünner poröser Formkörper aus Siliconverbindung S, nämlich Organopolysiloxan/Polyharnstoff/Polyamid oder Polyoxalyldiamin-Copolymere der allgemeinen Formel (III), 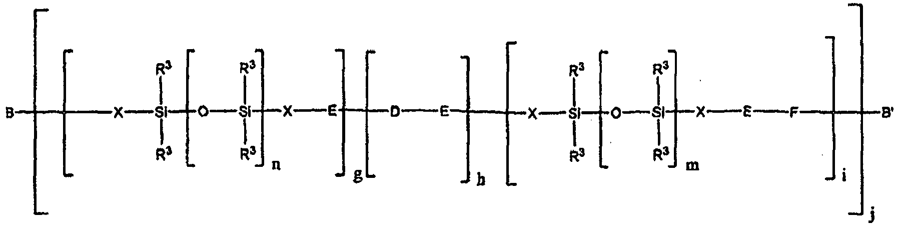 wobei das Strukturelement E ausgewählt wird aus den allgemeinen Formeln (IVa), (IVc), (IVd) und (IVf) 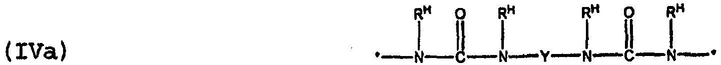 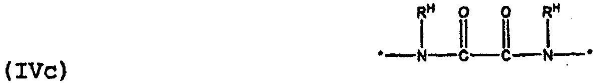 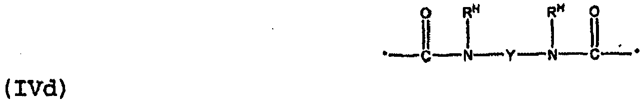 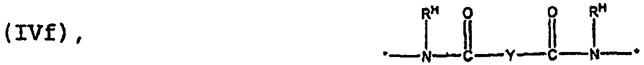 wobei das Strukturelement F ausgewählt wird aus den allgemeinen Formeln (Va), (Vc), (Vd) und (Vf) 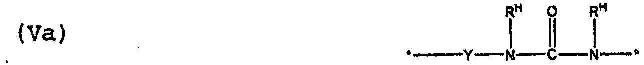 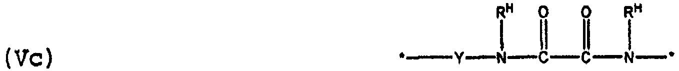 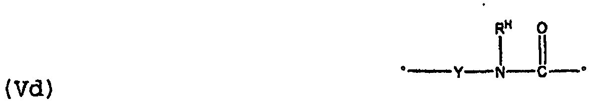 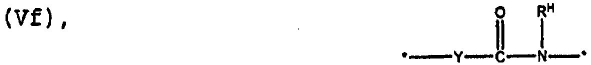 wobei
- R: substituierte oder unsubstituierte Kohlenwasserstoffreste bedeuten, die durch Sauerstoff- oder Stickstoffatome unterbrochen sein können,
- R³: die Bedeutung von R hat,
- R^{H}: Wasserstoff, oder die Bedeutung von R hat,
- X: einen Alkylen-Rest mit 1 bis 20 Kohlenstoffatomen, in dem einander nicht benachbarte Methyleneinheiten durch Gruppen -O- ersetzt sein können, oder einen Arylenrest mit 6 bis 22 Kohlenstoffatomen,
- Y: einen zweiwertigen, gegebenenfalls durch Fluor oder Chlor substituierten Kohlenwasserstoffrest mit 1 bis 20 Kohlenstoffatomen,
- D: einen gegebenenfalls durch Fluor, Chlor, C₁-C₆-Alkyl- oder C₁-C₆-Alkylester substituierten Alkylenrest mit 1 bis 700 Kohlenstoffatomen, in dem einander nicht benachbarte Methyleneinheiten durch Gruppen -O-, -COO-, -OCO-, oder-OCOO-, ersetzt sein können, oder Arylenrest mit 6 bis 22 Kohlenstoffatomen,
- B, B': eine reaktive oder nicht reaktive Endgruppe, welche kovalent an das Polymer gebunden ist,
- m: eine ganze Zahl von 1 bis 4000,
- n: eine ganze Zahl von 1 bis 4000,
- g: eine ganze Zahl von mindestens 1,
- h: eine ganze Zahl von 0 bis 40,
- i: eine ganze Zahl von 0 bis 30 und
- j: eine ganze Zahl größer 0 bedeuten,
bei dem
in einem ersten Schritt eine Lösung oder Suspension aus Siliconverbindung S in einem Gemisch aus Lösungsmittel L1 und Lösungsmittel L2 gebildet wird,
in einem zweiten Schritt die Lösung oder suspension in eine Form gebracht wird,
in einem dritten Schritt Lösungsmittel L1 aus der Lösung oder Suspension entfernt wird bis die Löslichkeit der Siliconverbindung S im Gemisch aus Lösungsmittel L1 und Lösungsmittel L2 unterschritten wird, wobei sich eine an Siliconverbindung S reiche Phase A und eine an Siliconverbindung S arme Phase B ausbildet und damit die Strukturbildung durch die Phase A erfolgt und
in einem vierten Schritt das Lösungsmittel L2 und Reste des Lösungsmittels L1 entfernt werden.

Vorzugsweise geliert die Siliconverbindung S bzw. fällt aus im dritten Schritt und dabei wird das dünne poröse Siliconformteil aus der Phase A erhalten. Die Poren werden durch die Phase B gebildet.
Der Prozess ist dabei deutlich einfacher und kostengünstiger als die entsprechenden literaturbekannten Prozesse.

Überraschender Weise wurde dabei gefunden, dass sich dünne poröse Silicon-Formkörper durch die durch Entfernen von Lösungsmittel L1 induzierte, insbesondere verdampfungsinduzierte Phasenseparation herstellen lassen.

Dies überrascht umso mehr, als dass sich normalerweise Silicone durch einfaches Entfernen, insbesondere Verdampfen von Lösungsmittel, nicht zu porösen Formkörpern verarbeiten lassen. Normalerweise entstehen kompakte Folien, die keine Porosität aufweisen.

Es wurde gefunden, dass sich gerade Siliconverbindung S besonders eignet, die über eine ausreichende mechanische Festigkeit nach der Strukturausbildung der Phase A verfügt. D.h. die ausgebildeten Kavitäten müssen nach der Entfernung des Lösungsmittels L2 und Reste von Lösungsmittel 1 stabil bleiben. Dies kann auf mehrere Arten geschehen.

Die Siliconverbindung S vernetzen über intermolekulare Wechselwirkungen, wie. z.B. über ionische Wechselwirkungen, Wasserstoffbrücken-Bindungen oder über van-der-Waals-Wechselwirkungen.

Besonders bevorzugt ist die Vernetzung der Silicon-Formkörper über kovalente Bindungen, wie sie z.B. durch Kondensationsreaktionen oder radikalische Mechanismen entstehen. Ganz bevorzugt ist die Vernetzung flüssiger, d.h. mit Viskositäten bis maximal 300.000 MPa, gelförmiger oder hochviskoser, d.h. Viskositäten über 2.000.000 MPa, Silicone, wie sie z.B. von der Wacker Chemie AG unter der Marke ELASTOSIL^{®} vertrieben werden. Ganz besonders bevorzugt ist die Vernetzung über Wasserstoffbrückenbindungen, wie sie z.B. in Organopolysiloxan-Polyharnstoff-Copolymeren, welche von der Wacker Chemie AG unter der Marke GENIOMER^{®} vertrieben werden, auftreten.

Die Vernetzung kann dabei getrennt oder simultan mit der Strukturausbildung der dünnen porösen Formkörper aus Siliconverbindung S erfolgen.

Ein derartiger Prozess zur Herstellung poröser Silicon-Formkörper wurde bisher nicht beschrieben und war in dieser Art nicht zu erwarten.

Die porösen Siliconformkörper weisen dabei Dampfdurchlässigkeiten auf, die deutlich höher liegen als die kompakter Siliconfolien des Stands der Technik. Weiterhin dringen Flüssigkeiten, wie z.B. Wasser, durch die porösen Silicon-formkörper erst bei höherem Druck.

Bevorzugt handelt es sich bei Rest R um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)-glykolresten substituiert sind, wobei letztere aus Oxyethylen-und/oder Oxypropyleneinheiten aufgebaut sind, besonders bevorzugt um Alkylreste mit 1 bis 12 Kohlenstoffatomen, insbesondere um den Methylrest.

Es kann sich bei Rest R aber auch um zweiwertige Reste handeln, die z.B. zwei Silylgruppen miteinander verbinden.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest und der Phenylethylrest.

Beispiele für substituierte Reste R sind Methoxyethyl-, Ethoxyethyl- und der Ethoxyethoxyethylrest oder Chlorpropyl-und Trifluorpropylrest.

Beispiele für zweiwertige Reste R sind der Ethylenrest, Polyisobutylendiylreste und propandiylterminierte Polypropylenglykolreste.

Bevorzugt handelt es sich bei Rest Y um gegebenenfalls mit Halogenatome, wie Fluor oder Chlor, substituierte Kohlenwasserstoffreste mit 3 bis 13 Kohlenstoffatomen, besonders bevorzugt um einen Kohlenwasserstoffrest mit 3 bis 13 Kohlenstoffatomen, insbesondere den 1,6-Hexamethylenrest, den 1,4-Cyclohexylenrest, den Methylen-bis-(4-cyclohexylen)rest, den 3-Methylen-3,5,5-trimethylcyclohexylenrest, den Phenylen- und den Naphthylenrest, den m-Tetramethylxylylenrest sowie den Methylen-bis-(4-phenylen)-Rest.

Beispiele für zweiwertige Kohlenwasserstoffreste Y sind Alkylenreste, wie der Methylen-, Ethylen-, n-Propylen-, iso-Propylen-, n-Butylen-, iso-Butylen-, tert, -Butylen-, n-Pentylen-, iso-Pentylen-, neo-Pentylen-, tert. -Pentylenrest, Hexylenreste, wie der n-Hexylenrest, Heptylenreste, wie der n-Heptylenrest, Octylenreste, wie der n-Octylenrest und iso-Octylenreste, wie der 2,2,4-Trimethylpentylenrest, Nonylenreste, wie der n-Nonylenrest, Decylenreste, wie der n-Decylenrest, Dodecylenreste, wie der n-Dodecylenrest; Cycloalkylenreste, wie Cyclopentylen , Cyclohexylen-, Cycloheptylenreste, und Methylcyclohexylenreste, wie der Methylen-bis-(4-cyclohexylen)- und der 3-Methylen-3,5,5-trimethylcyclohexylenrest; Arylenreste, wie der Phenylen- und der Naphthylenrest; Alkarylenreste, wie o-, m-, p-Tolylenreste, Xylylenreste, wie der m-Tetramethylxylylenrest, und Ethylphenylenreste; Aralkylenreste, wie der Benzylenrest und der Phenylethylenrest sowie der Methylen-bis-(4-phenylen) -Rest.

Vorzugsweise handelt es sich bei Rest X um Alkylenreste mit 1 bis 20 Kohlenstoffatomen, die durch Sauerstoffatome unterbrochen sein können, besonders bevorzugt um Alkylenreste mit 1 bis 10 Kohlenstoffatomen, die durch Sauerstoffatome unterbrochen sein können, insbesondere bevorzugt um n-Propylen-, Isobutylen-, 2-Oxabutylen- und Methylenreste.

Beispiele für Reste X sind die für Rest Y angegebenen Beispiele sowie gegebenenfalls substituierte Alkylenreste, in denen die Kohlenstoffkette durch Sauerstoffatome durchbrochen sein kann, wie z.B. 2-Oxabutylenrest.

Bei Rest B handelt es sich dabei bevorzugt um ein Wasserstoffatom, einen Rest OCN-Y-NH-CO-, einen Rest H₂N-Y-NH-CO-, einen Rest R³₃Si-(O-SiR³₂)ₙ- oder einen Rest R³₃Si-(O-SiR³₂)ₙ -X-E-.

Bei Rest B' handelt es sich bevorzugt um die für B angegeben Reste.

Bei Rest D handelt es sich bevorzugt um zweiwertige Polyetherreste und Alkylenreste, besonders bevorzugt um zweiwertige Polypropylenglykolreste sowie Alkylenreste mit mindestens 2 und höchstens 20 Kohlenstoffatomen, wie den Ethylen-, den 2-Methylpentylen und den Butylenrest, insbesondere handelt es sich um Polypropylenglykolreste mit 2 bis 600 Kohlenstoffatomen sowie den Ethylen- und den 2-Methylpentylenrest.

n bedeutet vorzugsweise eine Zahl von mindestens 3, insbesondere mindestens 10 und vorzugsweise höchstens 800, insbesondere höchstens 400.

m bedeutet vorzugsweise die für n angegebenen Bereiche.

Vorzugsweise bedeutet g eine Zahl von höchstens 100, besonders bevorzugt von 10 bis 60.

Vorzugsweise bedeutet h eine Zahl von höchstens 10, besonders bevorzugt von 0 oder 1, insbesondere 0.

j bedeutet vorzugsweise eine Zahl von höchstens 400, besonders bevorzugt 1 bis 100, insbesondere 1 bis 20.

Vorzugsweise bedeutet i eine Zahl von höchstens 10, besonders bevorzugt von 0 oder 1, insbesondere 0.

Die hier beschriebenen Systeme können alle mit dem Fachmann geläufigen Verfahren ausgehärtet werden.
Diese Systeme beinhalten optional noch weitere typische Additive, wie z.B. funktionelle Silane.

Es können im Verfahren neben den Siliconverbindungen S zusätzlich andere polymere Verbindungen mit eingesetzt werden. Vorzugsweise bestehen die im Verfahren hergestellten dünnen porösen Formkörper mindestens zu 50%, besonders bevorzugt mindestens zu 80%, insbesondere mindestens zu 90%, besser mindestens zu 95% aus den Siliconverbindungen S.

Das Lösungsmittel L1 ist leichter entfernbar aus der im ersten Schritt hergestellten Lösung oder Suspension aus Siliconverbindung S als das Lösungsmittel L2. Die Entfernbarkeit bezieht sich insbesondere auf leichteres Verdampfen oder Extrahieren.

Der Begriff Lösungsmittel L1 umfasst alle organischen und anorganischen Verbindungen, welche Siliconverbindung S bei den meisten Temperaturen auflösen. Dieser Begriff umfasst bevorzugt alle Verbindungen, welche bei ansonsten gleichen Bedingungen, wie z.B. Druck und Temperatur, die Siliconverbindung S zu einem höheren Anteil lösen können wie das Lösungsmittel L2.

D.h. die maximal erreichbare Konzentration der Siliconverbindung S im Lösungsmittel L1 ist bevorzugt höher als die maximal erreichbare Konzentration der Siliconverbindung S im Lösungsmittel L2.

Die maximal erreichbare Konzentration der Siliconverbindung S ist dabei bevorzugt um den Faktor 2, besonders bevorzugt um den Faktor 10, ganz besonders allerdings um den Faktor 100 im Lösungsmittel L1 höher als im Lösungsmittel L2.

Der Begriff Lösungsmittel L1 umfasst dabei zusätzlich auch höhermolekulare Verbindungen, wie z.B. flüssige Polymere.

Je nach Lösungsmittel L1 und Siliconverbindung S können auch erhöhte Drücke zur Löslichkeit beitragen.

Bevorzugt sind Lösungsmittel L1, in denen sich die siliconhaltigen Polymere bei 20°C und 1 bar zu mindestens 10 Gew.-%, besonders bevorzugt zu mindestens 15 Gew.-% und insbesondere zu mindestens 20 Gew.-% lösen.

Je nach Lösungsmittel und Polymer können auch erhöhte Drücke zur geringen Löslichkeit beitragen.

Der Begriff Lösungsmittel L2 umfasst dabei zusätzlich auch höhermolekulare Verbindungen, wie z.B. flüssige Polymere.

Bevorzugt sind Lösungsmittel L2, in denen sich die siliconhaltigen Polymere bei 20°C und 1 bar zu höchstens 20 Gew.-%, besonders bevorzugt zu höchstens 10 Gew.-% und insbesondere zu höchstens 1 Gew.-% lösen.

Das Lösungsmittel L1 und das Lösungsmittel L2 können jeweils aus einem oder mehreren Bestandteilen bestehen.

Vorzugsweise weist das Lösungsmittel L1 bzw, alle Bestandteile des Lösungsmittels L1 bei 20°C und 1 bar einen höheren Dampfdruck auf als das Lösungsmittel L2 bzw, alle Bestandteile des Lösungsmittels L2.

Vorzugsweise liegt der Siedepunkt des Lösungsmittels L1 bzw. aller Bestandteile des Lösungsmittels L1 bei 1 bar mindestens 30°, besonders bevorzugt mindestens 40°, insbesondere mindestens 50° tiefer als der Siedepunkt des Lösungsmittel L2 bzw. aller Bestandteile des Lösungsmittels L2.

Wenn im ersten Schritt eine Suspension der Siliconverbindung S im einem Gemisch aus Lösungsmittel L1 und Lösungsmittel L2 entsteht, deutet dies auf eine beginnende Phasenseparation hin, welche durch Rühren teilweise unterbunden werden kann.

Der Übergang der Lösung oder Suspension zum Siliconformkörper kann auf unterschiedliche Arten erfolgen. Falls z.B. eine homogene Lösung von Siliconverbindung S vorliegt, kann im dritten Schritt bei der Phasenseparation zuerst eine Suspension gebildet werden, aus welcher dann ein erster Gelkörper entsteht, der sich durch die weitere Entfernung des Lösungsmittels L1 bzw. Lösungmittels L2 zu einem stabilen Formkörper aus Siliconverbindung S umwandeln lässt.

Falls bereits im ersten Schritt eine Suspension vorliegt, kann im dritten Schritt bei der Phasenseparation die Gelstruktur aus der Suspension der Siliconverbindung S entstehen. Dies ist in den meisten Fällen schneller als beim Start mit homogenen Lösungen von Siliconverbindung S.

Vorzugsweise sind nach dem dritten Schritt höchstens 30 Gew.-%, besonders bevorzugt höchstens 20 Gew.-%, insbesondere höchstens 10 Gew.-% des im ersten Schritt eingesetzten Lösungsmittels L1 in den Phasen A und B vorhanden.

Das Lösungsmittel L1 kann im dritten Schritt durch alle technisch bekannten Möglichkeiten aus der Gießlösung entfernt werden. Bevorzugt ist die Entfernung des Lösungsmittels L1 durch Verdampfen oder Extrahieren.
Beispiele für bevorzugte technische Prozesse sind Verdampfen durch Konvektion, erzwungene Konvektion, Erhitzen oder verdampfen in feuchter Atmosphäre bzw. Extrahieren durch Lösungsmittelaustausch oder Auswaschen mit einem flüchtigen Lösungsmittel.

Die Methode muss dabei immer so gewählt werden, dass eine Herstellung der Formkörper in einem akzeptablen Zeitraum erfolgt, allerdings die Struktur auch ausgebildet werden kann.

Die Geschwindigkeit der Verdampfung wird vorzugsweise so gewählt, dass die flüssig-flüssig-Phasenseparation nicht unter thermodynamischen Gleichgewichtsbedingungen auftritt, da sonst keine porösen Strukturen entstehen.

Das Lösungsmittel L2 muss nicht immer inert sein. Gegebenenfalls ist das Polymer in dem Lösungsmittel L2 quellbar. Bevorzugt sind Lösungsmittel L2, welche eine Adsorption von bevorzugt nicht weniger als 10 Gew.-%, besonders bevorzugt nicht weniger als 50 Gew.-% besitzen.

Die passende Wahl des Lösungsmittels L2 ist wichtig, da dieses entscheidet, ob die Struktur nach der Phasenseparation erhalten bleibt oder nicht.

Das Lösungsmittel L2 kann im vierten Schritt auf alle dem Fachmann geläufigen Methoden Arten aus dem Formkörper entfernt werden. Beispiele sind Extrahieren, Verdampfen, ein sukzessiver Lösungsmittelaustausch oder einfaches Auswaschen des Lösungsmittels L2.

Die Lösung oder Suspension von Siliconverbindung S kann auf vielerlei Wege hergestellt werden. In einer bevorzugten Ausführungsform der Erfindung wird Siliconverbindung S in dem Lösungsmittel L1 gelöst und das Lösungsmittel L2 hinzugegeben. In einer besonders bevorzugten Ausführungsform der Erfindung wird das Polymer in einem Lösungsmittelgemisch aus L1 und L2 gelöst.

Die Löslichkeiten der Siliconverbindung S in Lösungsmittel L1 sind dem Fachmann geläufig, bzw. falls keine Angaben gefunden werden, durch Löslichkeitsuntersuchungen leicht zu bestimmen. Das dazu passende Lösungsmittel L2 kann in wenigen Versuchen schnell herausgefunden werden, z.B. in einfachen Trübungstitrationen. Dazu wird einer homogenen Polymerlösung solange ein zweites Lösungsmittel hinzugegeben, bis ein Ausfallen des Polymers beobachtet wird.

Das sich die Löslichkeiten von Siliconverbindung S stark unterscheiden, können Lösungsmittel L1 für eine bestimmte Siliconverbindung S gleichzeitig Lösungsmittel L2 für eine andere Siliconverbindung S sein.

Bevorzugte organische Lösungsmittel L1 bzw. Lösungsmittel L2 sind Kohlenwasserstoffe, halogenierte Kohlenwasserstoffe, Ether, Alkohole, Aldehyde, Ketone, Säuren, Anhydride, Ester, N-haltige Lösungsmittel und S-haltige Lösungsmittel. Beispiele für gängige Kohlenwasserstoffe sind Pentan, Hexan, Dimetyhlbutan, Heptan, Hex-1-en, Hexa-1,5-dien, Cyclohexan, Terpentin, Benzol, Isopropylbenzol, Xylol, Toluol, Waschbenzin, Naphthalin, sowie Terahydronaphthalin. Beispiele für gängige halogenierte Kohlenwasserstoffe sind Fluoroform, Perfluorheptan, Methylenchlorid, Chloroform, Tetrachlorkohlenstoff, 1,2-Dichlorethan, 1,1,1-Trichlorethan, Tetrachlorethen, Trichlorethen, Pentylchlorid, Bromoform, 1,2-Dibromethan, Methyleniodid, Fluorbenzol,- Chlorbenzol sowie 1,2-Dichlorbenzol. Beispiele für gängige Ether sind Diethylether, Butylethylether, Anisol, Diphenylether, Ethylenoxid, Tetrahydrofuran, Furan, Triethylenglykol sowie 1,4-Dioxan. Beispiele für gängige Alkohole sind Methanol, Ethanol, Propanol, Butanol, Octanol, Cyclohexanol, Benzylalkohol, Ethylenglykol, Ethylenglycolmonomethylether, Propylenglycol, Butylglycol, Glycerol, Glycerin, Phenol sowie m-Kresol. Beispiele für gängige Aldehyde sind Acetaldehyd und Butyralaldehyd. Beispiele für gängige Ketone sind Aceton, Diisobutylketon, Butan-2-on, Cyclohexanon sowie Acetophenon. Gängige Beispiele für Säuren sind Ameisensäure und Essigsäure. Gängige Beispiel für Anhydride sind Essigsäureanhydrid und Maleinsäureanhydrid. Gängige Beispiele von Estern sind Essigsäuremetyhlester, Essigsäureethylester, Essigsäurebutylester, Essigsäurephenylester, Glyceroltriacetat, Oxalsäurediethylester, Dioctylsebacat, Benzoesäuremethylester, Phthalsäuredibutylester, DBE^{®} (DuPont de nemours) sowie Phosphorsäuretrikresylester. Gängige Beispiele von stickstoffhaltigen Lösungsmittel sind Nitromethan, Nitrobenzol, Butyronitril, Acetonitril, Benzonitril, Malononitril, Hexylamin, Aminoethanol, N,N-Diethylaminoethanol, Anilin, Pyridin, N,N-Dimethylanilin, N,N-Dimethylformamid, N-Methylpiperazin sowie 3-Hydroxypropionitril. Gängige Beispiele für schwefelhaltige Lösungsmittel sind Schwefelkohlenstoff, Methanthiol, Dimethylsulfon, Dimethylsulfoxid sowie Thiophen. Gängige Beispiele für anorganische Lösungsmittel sind Wasser, Ammoniak, Hydrazin, Schwefeldioxid, Siliciumtetrachlorid und Titantetrachlorid.

Als höhermolekulare Lösungsmittel L1 bzw. Lösungsmittel L2 können alle nicht reaktiven Polymere eingesetzt werden. Bevorzugt werden bei der Verarbeitungstemperatur flüssige, in technischen Mengen verfügbare nicht reaktive Polymere eingesetzt.

Beispiele für derartige Lösungsmittel L1 bzw. Lösungsmittel L2 umfassen u.a. Polydimethylsiloxane mit nicht reaktiven Endgruppen, beispielsweise Trimethylsilyendgruppen tragende lineare Silicone, Phenylsiloxane, cyklische Siloxane, wie z.B. Cyclohexadimethylsiloxan oder Cyclodecadimethylsiloxan. Weitere Beispiele derartiger Lösungsmittel L1 bzw. Lösungsmittel L2 umfassen Polypropylenoxide, Polyethylenoxide, Polyamide, Polyvinylacetate, Polyisobutene, Polyacrylate, Polybutadiene, Polyisoprene und Copolymere der aufgelisteten Stoffgruppen.

Besonders bevorzugte Lösungsmittel L1 sind für Silicon-Copolymere als Siliconverbindung S Alkohole, z.B. Isopropanol.

Besonders bevorzugte Lösungsmittel L1 sind für Silicone z.B. Toluol, Xylol, Benzine (Sdp. höher 80 °C), Pentan oder Hexan. Besonders bevorzugte Lösungsmittel L2 sind für Silicon-Copolymere als Siliconverbindung S z.B. Toluol, Polyethylenglykole, Polypropylenglykole, Triethylenglykol, DBE^{®}, Glycerin oder NMP.

Die Siliconverbindungen können ebenfalls in ternären Lösungsmittelgemischen gelöst werden. Ein gängiges Beispiel für ein tertiäres Lösungsmittelgemisch kann z.B. eine Mischung aus einem Lösungsmittel L1 und zwei Lösungsmitteln L2 sein. Ein Beispiel für eine ternäre Lösungsmittel-Mischung ist Isopropanol (Lösungsmittel L1), N-Methylpiperazin (Lösungsmittel L2) und Dimethylformamid (Lösungsmittel L2). Die Siliconverbindungen S können ebenfalls in Lösungsmittelgemischen aus mehr als einem Lösungsmittel L1 und mehr als zwei Lösungsmitteln L2 gelöst werden.

Die Mengenverhältnisse zwischen Lösungsmittel L1 und Lösungsmittel L2 können in einem weiten Bereich variieren. Vorzugsweise werden im ersten Schritt auf 100 Gewichtsteile Lösungsmittel L1 mindestens 2, insbesondere mindestens 10 Gewichtsteile Lösungsmittel L2 und höchstens 5000, insbesondere höchstens 1000 Gewichtsteile Lösungsmittel L2 eingesetzt.

Bevorzugt enthält die im ersten Schritt hergestellte Lösung oder Suspension bis zu 95 Gew.-%, weiterhin bevorzugt bis zu 80 Gew.-%, besonders bevorzugt bis zu 60 Gew.-% an Lösungsmittel L1 und Lösungsmittel L2.

Bevorzugt enthält die im ersten Schritt hergestellte Lösung oder Suspension mindestens 1 Gew.-%, besonders bevorzugt mindestens 10 Gew.-%, insbesondere mindestens 15 Gew.-% und höchstens 70 Gew.-%, besonders bevorzugt höchstens 40 Gew.-%, insbesondere höchstens 25 Gew.-% an Siliconverbindung S.

Vorzugsweise wird die Lösung oder Suspension im zweiten Schritt bei Temperaturen von mindestens 0°C, besonders bevorzugt mindestens 10°C, insbesondere mindestens 20°C und höchstens 60°C, besonders bevorzugt höchstens 50°C in eine Form gebracht.

In einer Ausführungsform der Erfindung werden der Lösung oder Suspension weitere Additive hinzugegeben. Typische Additive sind anorganische Salze und Polymere. Gängige anorganische Salze sind LiF, NaF, KF, LiCl, NaCl, KCl, MgCl₂, CaCl₂, ZnCl₂ und CdCl₂.

Die zugegebenen Additive können nach der Herstellung in dem Formkörper verbleiben oder extrahiert bzw. mit anderen Lösungsmitteln ausgewaschen werden.

Dabei können auch Gemische von unterschiedlichen Additiven in die Lösung oder Suspension mit eingearbeitet werden. Die Konzentration der Additive in der Polymerlösung beträgt vorzugsweise mindestens 0,01 Gew.-%, besonders bevorzugt mindestens 0,1 Gew.-%, insbesondere mindestens 1 Gew.-% °C und höchstens 15 Gew.-%, besonders bevorzugt höchstens 5 Gew.-%. So wird in einer besonders bevorzugten Ausführungsform der Erfindung in die Lösung oder Suspension 1 bis 3 Gew.-% LiCl und 2 bis 5 Gew.-% NaCl gegeben.

Die Lösungen oder Suspensionen können zudem die in Formulierungen üblichen Additive und Zusätze enthalten. Zu nennen wären hier u.a. Verlaufshilfsmittel, oberflächenaktive Substanzen, Haftvermittler, Lichtschutzmittel wie UV-Absorber und/oder Radikalfänger, Thixotropiermittel sowie weitere Fest-und Füllstoffe. Zur Erzeugung der jeweils gewünschten Eigenschaftsprofile der Formkörper sind derartige Zusätze bevorzugt.

In einer ebenfalls bevorzugten Ausführungsform der Erfindung enthalten die porösen Formkörper noch einen Anteil an Partikeln. Eine Auflistung geeigneter Partikel findet sich in EP 1940940.

In einer weiterhin bevorzugten Ausführungsform der Erfindung enthalten die porösen Formkörper auch aktiv verstärkende Partikel. Beispiele für verstärkende Partikel sind pyrogene oder gefällte Kieselsäure mit behandelten oder unbehandelten Oberflächen.

Die Lösungen oder Suspensionen weisen dabei, bezogen auf das Gesamtgewicht, vorzugsweise einen Gehalt an Partikeln von 0-20 Gew. -%, besonders bevorzugt 0 - 10 Gew.-% und ganz besonders bevorzugt 0 - 5 Gew.-% auf.
Dabei können die Polymerlösungen einen oder mehrere verschiedene Partikeltypen enthalten, beispielsweise Siliciumdioxid sowie Aluminophosphat.

Bevorzugte geometrische Ausführungsformen der herstellbaren dünnen porösen Formkörper sind Folien, Schläuche, Fasern, Hohlfasern, Matten, wobei die geometrische Form an keinerlei feste Formen gebunden ist, sondern weites gehend von den verwendeten Substraten abhängt.

Weiterhin bevorzugt sind dreidimensionale poröse Formkörper, wobei die porösen Formkörper entweder als Beschichtung aufgebracht werden oder nach der Strukturausbildung wieder davon entfernt werden.

Zur Herstellung der Formkörper werden die Lösungen oder Suspensionen im zweiten Schritt vorzugsweise auf ein Substrat aufgebracht oder versponnen. Die auf Substrate aufgebrachten Lösungen oder Suspensionen werden dabei bevorzugt zu Folien weiterverarbeitet, während die versponnen Lösungen oder Suspensionen bevorzugt zu Schläuchen, Fasern und Hohlfasern verarbeitet werden.

Besonders bevorzugt werden aus Siliconverbindung S nach dem Verfahren poröse Folien und 3-dimensionale poröse Formkörper hergestellt.

Die Substrate enthalten vorzugsweise ein oder mehrere Stoffe aus der Gruppe umfassend Metalle, Metalloxide, Polymere oder Glas. Die Substrate sind dabei grundsätzlich an keine geometrische Form gebunden. Bevorzugt ist dabei allerdings der Einsatz von Substraten in Form von Platten, Folien, textile Flächensubstrate, gewobenen oder vorzugweise nichtgewobenen Netzen oder besonders bevorzugt in Form von nichtgewobenen Vliesen eingesetzt werden. Weiterhin besonders bevorzugt bei der Ausbildung poröser Formkörper aus Siliconverbindung S, vor allem bei der Tauch- bzw. Sprühbeschichtung, sind dreidimensionale Gebilde, wie z.B. Gehäuse, Steine, Handschuhe oder andere Abformkörper.

Substrate auf Basis von Polymeren enthalten beispielsweise Polyamide, Polyimide, Polyetherimide, Polycarbonate, Polybenzimidazole, Polyethersulfone, Polyester, Polysulfone, Polytetrafluorethylene, Polyurethane, Polyvinylchloride, Celluloseacetate, Polyvinylidenfluoride, Polyetherglykole, Polyethylenterephthalat (PET), Polyaryletherketone, Polyacrylnitril, Polymethylmethacrylate, Polyphenylenoxide, Polycarbonate, Polyethylene oder Polypropylene. Bevorzugt sind hierbei Polymere mit einer Glasübergangstemperatur Tg von mindestens 80°C. Substrate auf Basis von Glas enthalten beispielsweise Quarzglas, Bleiglas, Floatglas oder Kalk-Natron-Glas.

Bevorzugte Netz- oder Vlies-Substrate enthalten Glas-, Carbon-, Aramid-, Polyester-, Polyethylene-, Polypropylene-, Polyethylene/Polypropylene-Copolymer- oder Polyethylenterephthalat-Fasern.

Die Schichtdicke der Substrate beträgt vorzugsweise ≥ 1 µm, besonders bevorzugt ≥ 50 µm, ganz besonders bevorzugt ≥ 100 µm und vorzugsweise ≤ 2 mm, besonders bevorzugt ≤ 600 µm, ganz besonders bevorzugt ≤ 400 µm. Am meisten bevorzugte Bereiche für die Schichtdicke der Substrate sind die aus den vorgenannten Werten formulierbaren Bereiche.

Die Dicke der porösen Formkörper aus Siliconverbindung S wird vornehmlich durch die Menge an Lösung oder Suspension bestimmt. Da bei dem erfindungsgemäßen Prozess bevorzugt ein Verdampfungs- oder Extraktionsschritt stattfindet, sind dünnere Formkörper bevorzugt.

Alle technisch bekannten Formen des Auftrages der Lösung oder Suspension auf Substrate können für die Herstellung der porösen Formkörper eingesetzt werden.
Das Auftragen der Lösung oder Suspension auf das Substrat erfolgt dabei bevorzugt mittels eines Rakels, durch Meniskusbeschichtung, Gießen, Sprühen, Tauchen, Siebdruck, Tiefdruck, Transferbeschichtung, Gravurbeschichtung oder Spinon-Disk. Die so aufgetragenen Lösungen oder Suspensionen haben Filmdicken von vorzugsweise ≥ 10 µm, besonders bevorzugt ≥ 100 µm, insbesondere ≥ 200 µm und vorzugsweise ≤ 10.000 µm, besonders bevorzugt ≤ 5.000 µm, insbesondere ≤ 1000 µm. Am meisten bevorzugte Bereiche für die Filmdicken sind die aus den vorgenannten Werten formulierbaren Bereiche.

Vorzugsweise werden aus den in Form gebrachten Lösungen oder Suspensionen im dritten Schritt das Lösungsmittel L1 und vorzugsweise danach im vierten Schritt das Lösungsmittel L2 und Reste von Lösungsmittel L1 durch Verdampfen entfernt.
Das Verdampfen erfolgt vorzugsweise bei Temperaturen von mindestens 10°C, besonders bevorzugt mindestens 20°C und höchstens 150°C, besonders bevorzugt höchstens 200°C.
Das Verdampfen kann bei beliebigen Drücken durchgeführt werden, wie z.B. bei Unterdruck, bei Überdruck oder bei Normaldruck. Das Verdampfen kann ebenfalls unter definierten feuchte-Bedingungen stattfinden. Je nach Temperatur sind relative Feuchten im Bereich von 0,5 bis 99 % besonders bevorzugt.
Wie bereits erwähnt, kann der Verdampfungsschritt auch unter definierten Lösungsmittelatmosphären, z.B. H₂O-Dampf AlkoholDampf, erfolgen. Der Sättigungsgehalt der Atmosphäre kann dabei in einem weiten Bereich variiert werden, z.B. zwischen 0 % (trockene Atmosphäre) bis 100 % (vollständige Sättigung bei der Prozesstemperatur). Damit lässt sich die
Verdampfungsgeschwindigkeit des Lösungsmittels L1 bzw. die Aufnahme eines Lösungsmittels bzw. Lösungsmittels L2 aus der Atmosphäre, in einem weiten Bereich variieren.
Die bevorzugte Dauer des Verdampfens kann für das jeweilige System in wenigen Versuchen ermittelt werden. Bevorzugt beträgt das Verdampfen mindestens 0,1 Sekunden bis mehrere Stunden.
Die Angabe einer genauen Verdampfungsszeit kann nicht erfolgen, da die Bestimmung für jedes System und für jede Lösung oder Suspension individuell erfolgen muss.
In einer ebenfalls bevorzugten Ausführungsform der Erfindung wird in dem vierten Schritt das Lösungsmittel L2 und Reste von Lösungsmittel L1 durch Extraktion entfernt.
Die Extraktion erfolgt dabei vorzugsweise mit einem weiteren Lösungsmittel, welche die sich ausgebildete poröse Struktur nicht zerstört, aber gut mischbar mit dem Lösungsmittel L2 ist. Besonders bevorzugt ist die Verwendung von Wasser als Extraktionsmittel. Die Extraktion findet bevorzugt bei Temperaturen zwischen 20 °C und 100 °C statt. Die bevorzugte Dauer der Extraktion kann für das jeweilige System in wenigen Versuchen ermittelt werden. Bevorzugt beträgt die Dauer der Extraktion mindestens 1 Sekunde bis mehrere Stunden. Dabei kann der Vorgang auch mehrmals wiederholt werden.

Sowohl die Verdampfungsszeit als auch die Verdampfungsbedingungen beeinflussen die porösen Strukturen im Hinblick auf Porenart, Porengröße und Gesamtporosität.

Bevorzugt ist die Produktion von Formkörpern mit einer gleichmäßigen Porenverteilung entlang des Querschnittes. Besonders bevorzugt ist die Herstellung mikroporöser Formkörper, mit Porengrößen von 0,1 µm bis 20 µm.

Die Formkörper besitzen bevorzugt eine isotrope Porenverteilung.

Falls für die anvisierte Applikation bevorzugt, kann durch die Wahl der Prozessparameter auch eine anisotrope Porenverteilung im erfindungsgemäßen porösen Formkörper erzielt werden.

Die nach dem Prozess hergestellten Formkörper weisen im Allgemeinen eine poröse Struktur auf. Das freie Volumen beträgt vorzugsweise mindestens 5 Vol.-%, besonders bevorzugt mindestens 20 Vol.-%, insbesondere mindestens 35 Vol.-% und höchstens 90 Vol.-%, besonders bevorzugt höchstens 80 Vol.-%, insbesondere höchstens 75 Vol.-%.

Die so erhaltenen Formkörper können z.B. direkt als Membranen, vorzugsweise zur Trennung von Gemischen eingesetzt werden. Alternativ können die Formkörper vom Substrat abgenommen werden und dann direkt ohne weiteren Träger verwendet werden oder gegebenenfalls auf andere Substrate, wie Vliese, Gewebe oder Folien aufgebracht werden, vorzugsweise bei erhöhten Temperaturen und unter Anwendung von Druck, beispielsweise in einer Heißpresse oder in einem Laminiergerät. Um die Haftung auf den anderen Substraten zu verbessern, können Haftvermittler eingesetzt werden.

In einer bevorzugten Ausführungsform wird die Lösung oder Suspension im zweiten Schritt versponnen. Die dadurch herstellbaren Formkörper sind Fasern und Hohlfasern.

Unter Verspinnen versteht der Fachmann die Herstellung von Fasern, indem Polymerlösungen durch Faserspinndüsen verdüst werden.

Hohlfasern an sich sind dem Fachmann bekannt und sind im Allgemeinen zylinderförmige Fasern, die im Querschnitt einen oder mehrere durchgängige Hohlräume besitzen; derartige Hohlräume werden auch als Kanäle bezeichnet.

Der Außendurchmesser der Fasern beträgt vorzugsweise mindestens 10 µm, besonders bevorzugt mindestens 100 µm, insbesondere mindestens 300 µm und vorzugsweise höchstens 5 mm, besonders bevorzugt höchstens 2 mm, insbesondere höchstens 1000 µm.
Der Innendurchmesser der Hohlfasern, d.h. der Durchmesser der Kanäle, beträgt vorzugsweise mindestens 8 µm, besonders bevorzugt mindestens 80 µm, insbesondere mindestens 280 µm und vorzugsweise höchstens 4,5 mm, besonders bevorzugt höchstens 1,9 mm, insbesondere höchstens 900 µm.
Die Hohlfasern können beliebig lang sein.

Während der Herstellung der Hohlfasern befindet sich in den Hohlräumen der Hohlfasern üblicherweise ein Gas, ein Gasgemisch oder eine Flüssigkeit, vorzugsweise Luft, insbesondere Druckluft, oder Stickstoff, Sauerstoff, Kohlendioxid, Wasser oder organische Lösungsmittel, wie Kohlenwasserstoffe, halogenierte Kohlenwasserstoffe, Ether, Alkohole, Ketone, Säuren, Ester, Stickstoff-haltige Lösungsmittel oder Schwefelhaltige Lösungsmittel. Auf diese Weise kann ein Kollabieren der Hohlräume der Hohlfasern verhindert werden.

Das Verspinnen erfolgt vorzugsweise bei Temperaturen von 20 bis 150°C. Bei der Herstellung der Hohlfasern können gegebenenfalls ein oder mehrere weitere Polymerlagen co-versponnen werden. Auf diese Weise werden mehrlagige Hohlfasern erhalten.

Die so erhaltenen Hohlfasern werden nach dem dritten und vierten Schritt des erfindungsgemäßen Prozesses weiterverarbeitet.

In einer weiterhin bevorzugten Form der Erfindung werden die porösen Siliconformkörper durch Extrusion zu freitragenden Folien oder auf Substrate hergestellt.

Die fertig gestellten Formkörper weisen Schichtdicken von vorzugsweise mindestens 1 µm, besonders bevorzugt mindestens 10 µm, insbesondere mindestens 50 µm, am meisten bevorzugt 100 µm und vorzugsweise höchstens 10000 µm, besonders bevorzugt höchstens 2000 µm, insbesondere höchstens 1000 µm, ganz besonders bevorzugt höchstens 500 µm auf.

Die so erhaltenen Formkörper können direkt als Membran, vorzugsweise zur Trennung von Gemischen eingesetzt werden oder alternativ einer weiteren, gängigen Nachbehandlung unterzogen werden, wie beispielsweise einer thermischen Behandlung, Behandlung mit Hoch- oder Niederdruck-Plasma, Bestrahlung mit Gamma-, Röntgen-, Mikrowellen- oder aktinischen Strahlung oder einer Oberflächenmodifikation, beispielsweise einer Oberflächenbeschichtung.

Die Oberflächenbeschichtung bzw. die imprägnierten Oberflächen der Formkörper hat vorzugsweise eine Dicke von mindestens 10 nm, besonders bevorzugt mindestens 100 nm, insbesondere mindestens 500 nm und vorzugsweise höchstens 500 µm, besonders bevorzugt höchstens 50 µm, insbesondere höchstens 10 µm. Für die Beschichtung eignen sich beispielsweise Polymere wie Polyamide, Polyimide, Polyetherimide, Polycarbonate, Polybenzimidazole, Polyethersulfone, Polyester, Polysulfone, Polytetrafluorethylene, Polyurethane, Silicone, Polydimethylsilicone, Polymethylphenylsilicone, Polymethyloctylsilicone, Polymethylallcylsilicone, Polymethylarylsilicone, Polyvinylchloride, Polyetherglykole, Polyethylenterephthalat (PET), Polyaryletherketone, Polyacrylnitril, Polymethylmetaacrylate, Polyphenylenoxide, Polycarbonate, Polyethylene oder Polypropylene, Die Polymere können mit üblichen Methoden auf die Formkörper aufgebracht werden, beispielsweise mittels Laminieren, Sprühen, Rakeln oder Kleben. Vorzugsweise wird eine derartige Beschichtung auf Formkörper mit Poren von 10 nm bis 10 µm aufgebracht.

Die Formkörper eigenen sich als Beschichtung für dreidimensionale Gebilde um deren Oberflächeneigenschaften im Hinblick auf z.B. Schall- oder Wärmedämmung, Stoßdämpfung zu verändern. Die bei der Beschichtung erreichbare Atmungsaktivität kann dabei eine erwünschte zusätzliche Eigenschaft darstellen. Bevorzugt werden Gehäuse, Baustoffe oder Textilien mit den erfindungsgemäßen Formkörpern beschichtet.

Weiterhin können die porösen Siliconformkörper auch in Wundpflaster eingesetzt werden. Ebenfalls bevorzugt ist der Einsatz der porösen Silicon-Formkörper in Verpackungsmaterialien insbesondere bei der Verpackung von Lebensmitteln, die nach der Herstellung noch weitere Reifeprozesse durchlaufen.

Die Formkörper eignen sich zum Einsatz als Membran für alle gängigen Verfahren zur Trennung von Gemischen, wie Reverse Osmose, Gastrennung, Pervaporation, Nanofiltration, Ultrafiltration oder Mikrofiltration. Mit den Formkörpern können fest-fest, gasförmig-gasförmig, fest-gasförmig oder flüssig-gasförmig, insbesondere flüssig-flüssig und flüssigfest Gemische getrennt werden.

So zeigen die Formkörper bei ihrem Einsatz als Membranen hohe Trennleistungen bei der Abtrennung von Partikel, Bakterien und Viren aus Wasser. Die Membranen eignen sich auch zur Entfernung von Wasser aus Kraftstoffen, wie Benzin, Bioethanol oder Dieselkraftstoffen. Weitere Einsatzgebiete der Formkörper sind Dampfpermeationsanlagen zur Trennung von Ethanol-Wasser-Gemischen oder für die Abtrennung von flüchtigen, organischen Verunreinigungen (auch unter der Abkürzung VOC (volatile organic compounds) bekannt) aus Abwässern, beispielsweise zur Abtrennung von Benzol, Aceton, Isopropanol, Ethanol, Methanol, Xylene, Toluol, Vinylchlorid, Hexan, Aniline, Butanol, Acetaldehyd, Ethylenglykol, DMF, DMAC, Methyl-ethyl-ketone sowie Methyl-isobutyl-keton.
Die Formkörper eignen sich auch für die Aufreinigung von Elektrotauchlack, z.B. in der Automobilindustrie, der Proteinaufreinigung, der Reinigung von Öl-Wasser-Emulsionen, z.B. für die Kühlung und das Schmieren von Werkstücken, sowie die industrielle Wasseraufreinigung von Abwässern mit partikelförmigen Verunreinigungen, z.B. Latexrückständen. Weitere typische Anwendungen sind die Entfernung von Bakterien oder Viren aus Wasser, die sterile Filtration von pharmazeutischen Produkten, der Sterilisation von Wein und Bier, die Herstellung von partikelfreiem Reinstwasser für die Elektroindustrie sowie die Behandlung von Abwasser in Kläranlagen in sog. Membran-Bioreaktor-Anlagen.
Die erfindungsgemäßen Formkörper lassen sich ebenfalls in Bekleidungsstücken, wie z.B. in Jacken, Handschuhen, Mützen oder Schuhen, oder als Dachbahnen verwenden. Die Formkörper sind dabei wasserabweisend und atmungsaktiv.

Die Formkörper lassen sich ebenfalls für die Blutfiltration, z.B. Dialyse bzw. Hemodialyse, einsetzen.
Weitere Anwendungen für die Formkörper sind beispielsweise in Membrane Technologie and Applications, second Edition, R. W. Baker, New York, Wiley, 2004 beschrieben.

Die so hergestellten Formkörper lassen sich auch als Separatoren, z.B. in primären wie auch sekundären Batterien, einsetzen. Besonders bevorzugt dabei ist der Einsatz der Formkörper in Lithium-Ionen-Akkus.

Die Formkörper können zu den gängigen Modulen verbaut werden, wie beispielsweise zu Hohlfasermodulen, spiralgewundenen Wickelmodulen, Platten-Modulen, Cross-Flow-Modulen oder Deadend-Modulen.

Weitere Applikationen der porösen Silicon-Formkörper decken sich mit typischen Anwendungen bekannter Silicon-Schäume, wie z.B. Wärme/Kälteisolierung, Schall- und Stossdämpfung oder Dichtungsringe.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiel 1: Herstellung einer Gleßlösung mit N-Methyl-2-pyrrolidon

Zu 16 g Isopropanol, Siedepunkt 82°C und 16 g N-Methyl-2-pyrrolidon (NMP), Siedepunkt 203°C werden 8 g eines Polymergemisches bestehend aus 2 g organopolysiloxan-Polyharnstoff Copolymeres (GENIOMER^{®} 200 der Wacker Chemie AG) und 6 g eines Organopolysiloxan-Polyharnstoff Copolymeres (SLM TPSE 100 der Wacker Chemie AG) hinzugegeben.
Der gesamte Ansatz wird im Anschluss daran 16 h bei Raumtemperatur auf einem Vertikalschüttler gelöst.
Man erhält eine leicht trübe, viskose Lösung mit einem Feststoffgehalt von 20 Gew.-%,

### Beispiel 2: Herstellung eines porösen Siliconformkörpers

10 g der Lösung aus Beispiel 1 werden in eine Teflonschale gegossen. Während des Verdampfens des Isopropanols verfestigt sich die Mischung und wird leicht trübe. Nachdem Isopropanol und NMP innerhalb von 16 h verdampft sind, bleibt der poröse Siliconformkörper mit einer Schichtdicke von 500 µm zurück.

Im Rasterelektronenmikroskop sind die homogene und gleichmäßige Verteilung der ca. 10 µm großen Poren der Folien deutlich zu erkennen. Auf den Oberflächen der Folien sind ebenfalls ca. 10 µm große Löcher zu erkennen. Die Gesamtporosität der Folie beträgt ca. 60 Vol.-%.

### Beispiel 3: Herstellung eines porösen Siliconformkörpers

2 g der Lösung aus Beispiel 1 werden in eine Teflonschale gegossen. Während des Verdampfens des Isopropanols verfestigt sich die Mischung und wird leicht trübe. Nachdem Isopropanol und NMP innerhalb von 16 h verdampft sind, bleibt der poröse Siliconformkörper mit einer Schichtdicke von 100 µm zurück.

Im Rasterelektronenmikroskop sind die homogene und gleichmäßige Verteilung der ca. 10 µm großen Poren beider Folien deutlich zu erkennen. Auf den Oberflächen der Folien sind ebenfalls ca. 10 µm große Löcher zu erkennen. Die Gesamtporosität der Folie beträgt ca. 60 Vol.-%.

### Beispiel 4: Herstellung einer Gleßlösung mit einem höheren Anteil an Isopropanol

Zu 24 g Isopropanol, Siedepunkt 82°C und 8 g N-Methyl-2-pyrrolidon (NMP), Siedepunkt 203°C werden 8 g eines Polymergemisches bestehend aus 2 g Organopolysiloxan-Polyharnstoff Copolymeres (GENIOMER^{®} 200) und 6 g eines Organopolysiloxan-Polyharnstoff Copolymeres (SLM TPSE 100) hinzugegeben.
Der gesamte Ansatz wird im Anschluss daran 16 h bei Raumtemperatur auf einem Vertikalschüttler gelöst.
Man erhält eine leicht trübe, viskose Lösung mit einem Feststoffgehalt von 20 Gew.-%.

### Beispiel 5: Herstellung eines porösen Siliconformkörpers mit anisotroper Porenstruktur

2 g der Lösung aus Beispiel 4 werden in eine Teflonschale gegossen. Während des Verdampfens des Isopropanols verfestigt sich die Mischung und wird leicht trübe. Nachdem Isopropanol und NMP innerhalb von 16 h verdampft sind, bleibt der poröse Siliconformkörper mit einer Schichtdicke von 150 µm zurück.

Im Rasterelektronenmikroskop ist eine anistrope Porenverteilung zu erkennen. Auf der Formkörperunterseite sind Poren von 10 µm zu erkennen, während auf der Oberfläche der Folien keine Poren mehr zu erkennen sind. Die Deckschicht weißt dabei eine Dicke von ca, 20 µm auf. Die Gesamtporosität der Folie beträgt ca. 60 Vol.-%.

### Beispiel 6: Herstellung einer Gleßlösung mit Triethylenglykol

Zu einer Lösung, bestehend aus 7,5 g Isopropanol und 2,5 g eines Polymergemisches bestehend aus 0,625 g Organopolysiloxan-Polyharnstoff Copolymeres (GENIOMER^{®} 200) und 1,875 g eines Organopolysiloxan-Polyharnstoff Copolymeres (SLM TPSE 100) werden 3,0 g Triethylenglykol, Siedepunkt 278 °C, hinzugegeben. Der gesamte Ansatz wird im Anschluss daran 2 h bei Raumtemperatur auf einem Vertikalschüttler gelöst.
Man erhält eine leicht trübe, viskose Lösung mit einem Feststoffgehalt von 19 Gew.-%.

### Beispiel 7: Herstellung eines porösen Siliconformkörpers

Für die Herstellung eines Siliconformkörpers aus der in Beispiel 6 hergestellten Rakellösung wird ein Rakelziehgerätes (Coatmaster 509 MC-I, Erichsen eingesetzt.
Als Filmziehrahmen wird ein Kammerrakel mit einer Filmbreite von 11 cm und einer Spalthöhe von 600 µm verwendet.
Die als Substrat eingesetzte Glasplatte wird mit Hilfe einer Vakuumsaugplatte fixiert. Die Glasplatte wird vor dem Rakelauftrag mit einem in Ethanol getränktem Reinraumtuch abgewischt. Auf diese Weise werden evtl. vorhandene Partikelverunreinigungen entfernt.
Im Anschluss daran wird der Filmziehrahmen mit der Lösung befüllt und mit einer konstanten Filmziehgeschwindigkeit von 10 mm/s über die Glasplatte gezogen.
Danach wird der noch flüssige Nassfilm bei 20 °C an Luft für ca. 30 min getrocknet. Dabei zeigt sich eine leichte Trübung des Films.
Dieser Formkörper, welche noch Triethylenglkol enthält, wird in Wasser für ca. 10 min eingelegt um das Triethylenglykol zu entfernen. Im Anschluss daran wird der Formkörper für ca. 30 min an Luft getrocknet.

Man erhält eine ca. 140 µm dicke, undurchsichtige Membran. Im Rasterelektronenmikroskop sind die homogene und gleichmäßige Verteilung der ca. 10 µm großen Poren deutlich zu erkennen. Auf den Oberflächen der Folien sind ebenfalls ca. 10 µm große Löcher zu erkennen. Die Gesamtporosität der Folie beträgt ca. 60 Vol.-%.

### Beispiel 8: Herstellung eines porösen Siliconformkörpers mit größeren Poren

Analog zu Beispiel 5 wird ein Nassfilm gefertigt.
Im Anschluss daran wird der noch flüssige Nassfilm mit einer Glasschale abgedeckt und bei 20 °C für ca. 60 min getrocknet. Dabei zeigt sich eine leichte Trübung des Films.
Dieser Formkörper, welche noch Triethylenglykol enthält, wird in Wasser für ca. 10 min eingelegt um das Triethylenglkol aus dem Formkörper auszuwaschen. Im Anschluss daran wird der Formkörper für ca. 30 min an Luft getrocknet.

Man erhält einen ca. 140 µm dicke, undurchsichtigen porösen Siliconformkörper. Im Rasterelektronenmikroskop sind die homogene und gleichmäßige Verteilung der ca. 20 µm großen Poren deutlich zu erkennen. Auf den Oberflächen der Folien sind ebenfalls ca. 20 µm große Löcher zu erkennen. Die Gesamtporosität der Folie beträgt ca. 60 Vol.-%.

### Beispiel 9:(nicht erfindungsgemässes Vergleichsbeispiel) Herstellung kompakter Filme ohne Porosität

Für die Herstellung von kompakten Filmen werden zu 32 g Isopropanol 8 g eines Polymergemisches bestehend aus 2 g Organopolysiloxan-Polyharnstoff Copolymeres (GENIOMER^{®} 200) und 6 g eines Organopolysiloxan-Polyharnstoff Copolymeres (SLM TPSE 100) hinzugegeben.
Der gesamte Ansatz wird im Anschluss daran 16 h bei Raumtemperatur auf einem Vertikalschüttler gelöst.
Man erhält eine klare Lösung mit einem Feststoffgehalt von 20 Ges.-%.
Als Filmziehrahmen wird ein Kammerrakel mit einer Filmbreite von 11 cm und einer Spalthöhe von 300 µm verwendet.
Die als Substrat eingesetzte Glasplatte wird mit Hilfe einer Vakuumsaugplatte fixiert. Die Glasplatte wird vor dem Rakelauftrag mit einem in Ethanol getränktem Reinraumtuch abgewischt. Auf diese Weise werden evtl. vorhandene Partikelverunreinigungen entfernt.
Im Anschluss daran wird der Filmziehrahmen mit der Lösung befüllt und mit einer konstanten Filmziehgeschwindigkeit von 25 mm/s über die Glasplatte gezogen.
Danach wird der noch flüssige Nassfilm bei 80 °C für ca. 3 h getrocknet.
Man erhält einen transparenten Film mit einer Schichtdicke von 50 µm.

### Austestung der herstellten Formkörper

### Gas-Transporteigenschaften der in den Beispielen 5 und 9 hergestellten Formkörper und Filme

Die unterschiedlichen Proben werden mit dem Gasdurchlässigkeitsprüfgerät GPC (Brugger) im Hinblick auf ihre unterschiedlichen Gasdurchlässigkeiten von N₂ und O₂ untersucht. Die Ergebnisse der untersuchten Proben sind in Tabelle 1 zusammengefasst. Die Messungen werden bei einem konstanten Gasfluss von 100 cm³/min und einer konstanten Messtemperatur von 20 °C durchgeführt.

**Tabelle 1 Zusammenfassung der untersuchten Proben**

| Probe | N₂-Permeabilität | O₂-Permeabilität | N₂/O₂-Selektivität |
|---|---|---|---|
| Bsp. 5 | 1300 | 626 | 2,2 |
| Bsp. 9 * | 195 | 87 | 2,2 |

| | | | |
|---|---|---|---|
| Einheiten: Barrer * = nicht erfindungsgemäß | | | |

Anhand der Tabelle 1 wird klar ersichtlich, dass die Permeabilitäten durch den anisotropen, porösen Aufbau der erfindungsgemäßen Formkörper aus dem Beispiel 5 im Vergleich zu dem aus Vollmaterial hergestelltem Film aus Beispiel 9 deutlich höher sind. Dabei bleibt aber die N_{2/}O₂-Selektivität gleich hoch.
Diese Eigenschaften machen die erfindungsgemäßen Formkörper deutlich effizienter als Materialien des Stands der Technik.

### Wasserdampf-Transporteigenschaften der in den Beispielen 2, 4 und 9 hergestellten Formkörper und Film

Die Proben werden mit dem Wasserdampfurchlässigkeitsprüfgerät LYSSY L80-5000 (Lyssy AG, Zollikon) im Hinblick auf ihre Wasserdampfdurchlässigkeit untersucht (Testmethode DIN EN ISO 15106-1, Testbedingungen T = 23 °C, RH = 10 - 15 %). Die Ergebnisse sind in Tabelle 2 zusammengefasst.

**Tabelle 2 Zusammenfassung der untersuchten Proben**

| Probe | Wasserdampfdurchlässigkeit |
|---|---|
| Bsp. 2 | 1700 |
| Bsp. 3 | 2000 |
| Bsp. 9 * | nicht zu bestimmen, da zu gering |

| | |
|---|---|
| * = nicht erfindungsgemäß Einheiten: g d⁻¹ m⁻² | |

Anhand der Tabelle 2 wird klar ersichtlich, dass die Wasserdampfdurchlässigkeiten durch den porösen Aufbau der erfindungsgemäßen Formkörper aus den Beispielen 2 und 3 im Vergleich zu dem aus Vollmaterial hergestelltem Film aus Beispiel 9 deutlich höher sind.
Diese Eigenschaften machen die erfindungsgemäßen Formkörper deutlich effizienter als Materialien des Stands der Technik.

## Patentansprüche

1. Verfahren zur Herstellung dünner poröser Formkörper aus Siliconverbindung S, nämlich Organopolysiloxan/Polyharnstoff/Polyamid oder Polyoxalyldiamin-Copolymere der allgemeinen Formel (III), 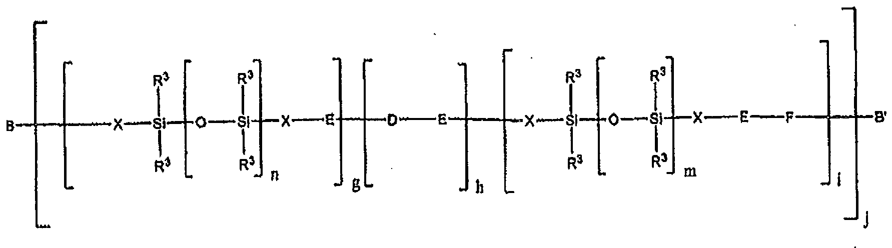 wobei das Strukturelement E ausgewählt wird aus den allgemeinen Formeln (IVa), (IVc), (IVd) und (IVf) 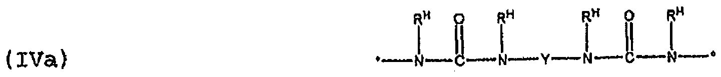 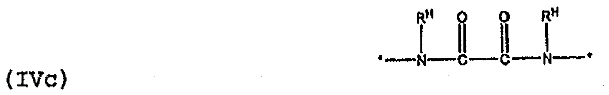 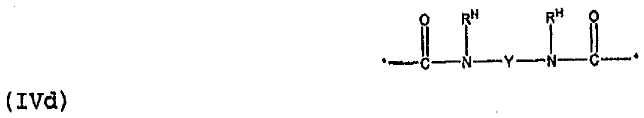 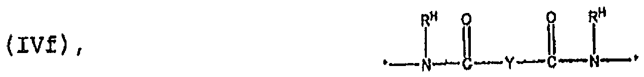 wobei das Strukturelement F ausgewählt wird aus den allgemeinen Formeln (Va), (Vc), (Vd) und (Vf) 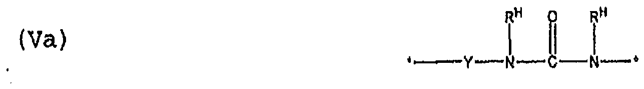 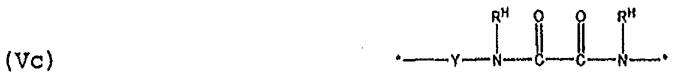 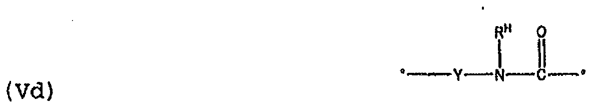 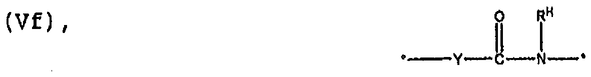 wobei
R substituierte oder unsubstituierte Kohlenwasserstoffreste bedeuten, die durch Sauerstoff- oder Stickstoffatome unterbrochen sein können,
R³ die Bedeutung von R hat,
R^{H} Wasserstoff, oder die Bedeutung von R hat,
X einen Alkylen-Rest mit 1 bis 20 Kohlenstoffatomen, in dem einander nicht benachbarte Methyleneinheiten durch Gruppen -O- ersetzt sein können, oder einen Arylenrest mit 6 bis 22 Kohlenstoffatomen,
Y einen zweiwertigen, gegebenenfalls durch Fluor oder Chlor substituierten Kohlenwasserstoffrest mit 1 bis 20 Kohlenstoffatomen,
D einen gegebenenfalls durch Fluor, Chlor, C₁-C₆-Alkyl- oder C₁-C₆-Alkylester substituierten Alkylenrest mit 1 bis 700 Kohlenstoffatomen, in dem einander nicht benachbarte Methyleneinheiten durch Gruppen -O-, -COO-, -OCO-, oder-OCOO-, ersetzt sein können, oder Arylenrest mit 6 bis 22 Kohlenstoffatomen,
B, B' eine reaktive oder nicht reaktive Endgruppe, welche kovalent an das Polymer gebunden ist,
m eine ganze Zahl von 1 bis 4000,
n eine ganze Zahl von 1 bis 4000,
g eine ganze zahl von mindestens 1,
h eine ganze Zahl von 0 bis 40,
i eine ganze Zahl von 0 bis 30 und
j eine ganze Zahl größer 0 bedeuten,
bei dem
in einem ersten Schritt eine Lösung oder Suspension aus Siliconverbindung S in einem Gemisch aus Lösungsmittel L1 und Lösungsmittel L2 gebildet wird,
in einem zweiten Schritt die Lösung oder Suspension in eine Form gebracht wird,
in einem dritten Schritt Lösungsmittel L1 aus der Lösung oder Suspension entfernt wird bis die Löslichkeit der Siliconverbindung S im Gemisch aus Lösungsmittel L1 und Lösungsmittel L2 unterschritten wird, wobei sich eine an Siliconverbindung S reiche Phase A und eine an Siliconverbindung S arme Phase B ausbildet und damit die Strukturbildung durch die Phase A erfolgt und
in einem vierten Schritt das Lösungsmittel L2 und Reste des Lösungsmittels L1 entfernt werden.

2. Verfahren nach Anspruch 1, bei dem der Siedepunkt des Lösungsmittels L1 bei 1, bar mindestens 30° tiefer als der Siedepunkt des Lösungsmittel L2 liegt.

3. Verfahren nach Anspruch 1 oder 2, bei dem aus den in Form gebrachten Lösungen oder Suspensionen im dritten Schritt das Lösungsmittel L1 und im vierten Schritt das Lösungsmittel L2 durch Verdampfung entfernt werden.

4. Verfahren nach Anspruch 1 bis 3, bei dem aus den in Form gebrachten Lösungen oder Suspensionen im vierten Schritt das Lösungsmittel L2 und Reste von Lösungmittel L1 durch eine Extraktion mit einem weiteren Lösungsmittel entfernt werden.

5. Dünner poröser Formkörper aus Siliconverbindung S, herstellbar nach dem Verfahren nach Anspruch 1 bis 4.

6. Verwendung der Formkörper gemäss Anspruch 5 als Membranen.

## Claims

1. Process for producing thin porous moldings comprising silicone compound S, namely organopolysiloxane/polyurea/polyamide or polyoxalyldiamine copolymers of general formula (III) 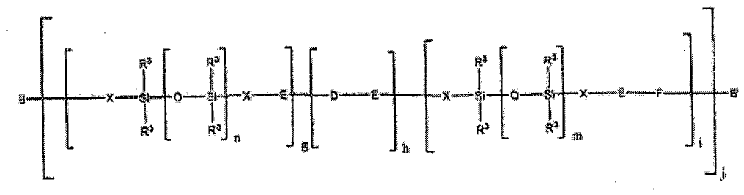 where the structural element E is selected from general formulae (IVa), (IVc), (IVd) and (IVf) 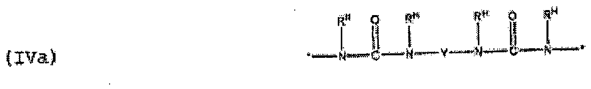 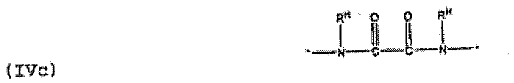 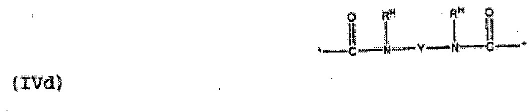 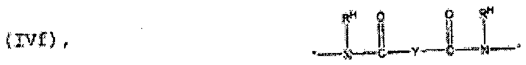 where the structural element F is selected from general formulae (Va), (Vc), (Vd) and (Vf) 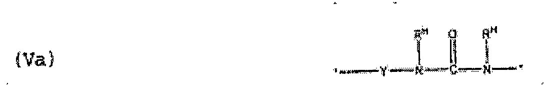 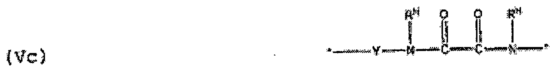 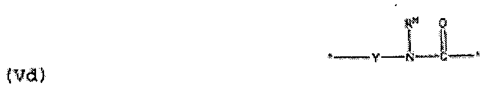 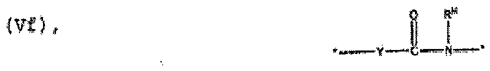 where
R represents substituted or unsubstituted hydrocarbon moieties, which can be interrupted by oxygen or nitrogen atoms,
R³ has the meanings of R,
R^{H} represents hydrogen or has the meanings of R,
X represents an alkylene moiety of 1 to 20 carbon atoms in which mutually nonadjacent methylene units can be replaced by -O- groups, or an arylene moiety of 6 to 22 carbon atoms,
Y represents a divalent, optionally fluorine- or chlorine-substituted hydrocarbon moiety of 1 to 20 carbon atoms,
D represents an alkylene moiety of 1 to 700 carbon atoms which is optionally substituted by fluorine, chlorine, C₁-C₆-alkyl or C₁-C₆-alkyl esters and in which mutually nonadjacent methylene units may be replaced by groups -O-, -COO-, -OCO-, or -OCOO-, or arylene moiety of 6 to 22 carbon atoms,
B and B' represent a reactive or nonreactive end group attached to the polymer by covalent bonding,
m represents an integer from 1 to 4000,
n represents an integer from 1 to 4000,
g represents an integer of at least 1,
h represents an integer from 0 to 40,
i represents an integer from 0 to 30, and
j represents an integer above 0,
wherein
a first step comprises forming a solution or suspension comprising silicone compound S in a mixture comprising solvent L1 and solvent L2,
a second step comprises introducing the solution or suspension into a mold,
a third step comprises removing solvent L1 from the solution or suspension until silicone compound S ceases to be soluble in the mixture comprising solvent L1 and solvent L2 to form a phase A, rich in silicone compound S, and a phase B, lean in silicone compound S, and hence to effect structure formation through phase A, and
a fourth step comprises removing the solvent L2 and residues of the solvent L1.

2. Process according to Claim 1 wherein the boiling point of solvent L1 at 1 bar is at least 30° lower than the boiling point of solvent L2.

3. Process according to Claim 1 or 2 wherein evaporation is used to remove solvent L1 from the molded solutions or suspensions in the third step and solvent L2 in the fourth step.

4. Process according to Claims 1 to 3 wherein solvent L2 and residues of solvent L1 are removed from the molded solutions or suspensions in the fourth step by extraction with a further solvent.

5. Thin porous molding comprising silicone compound S, obtainable by the process according to Claims 1 to 4.

6. Use of moldings according to Claim 5 as membranes.

## Revendications

1. Procédé pour la production de corps façonnés poreux minces en composé siliconé S, à savoir des copolymères d'organopolysiloxane/polyurée/polyamide ou polyoxalyldiamine de formule générale (III), 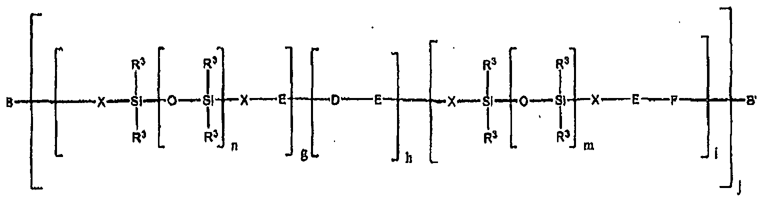 l'élément de structure E étant choisi parmi les formules générales (IVa), (IVc), (IVd) et (IVf) 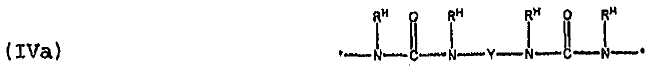 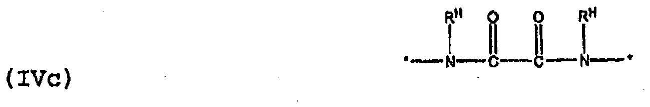 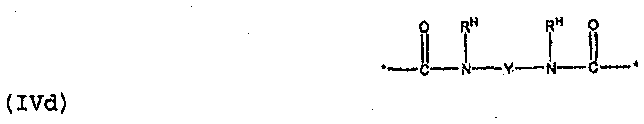 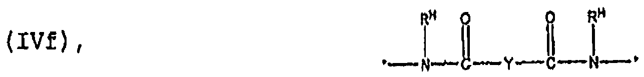 l'élément de structure F étant choisi parmi les formules générales (Va), (Vc), (Vd) et (Vf) 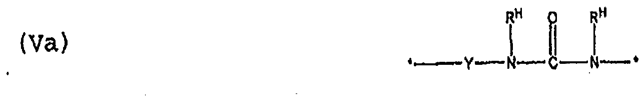 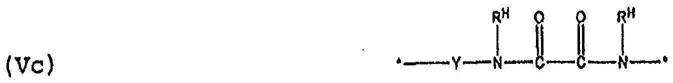 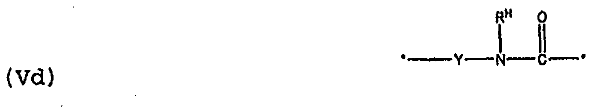 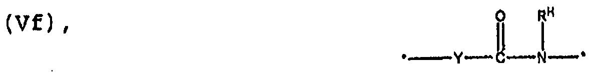 où
R signifie des radicaux hydrocarbonés substitués ou non substitués, qui peuvent être interrompus par des atomes d'oxygène ou d'azote,
R³ présente la signification de R,
R^{H} signifie hydrogène ou présente la signification de R,
X signifie un radical alkylène comprenant 1 à 20 atomes de carbone, dans lequel des unités méthylène non adjacentes peuvent être remplacées par des groupes -O-, ou un radical arylène comprenant 6 à 22 atomes de carbone,
Y signifie un radical hydrocarboné divalent, le cas échéant substitué par fluor ou chlore comprenant 1 à 20 atomes de carbone,
D signifie un radical alkylène comprenant 1 à 700 atomes de carbone, le cas échéant substitué par fluor, chlore, alkyle en C₁-C₆ ou ester d'alkyle en C₁-C₆, dans lequel des unités méthylène non adjacentes peuvent être remplacées par des groupes -O-, -COO-, -OCO-, ou -OCOO-, ou un radical arylène comprenant 6 à 22 atomes de carbone, le cas échéant substitué par fluor, chlore, alkyle en C₁-C₆ ou ester d'alkyle en C₁-C₆,
B, B' signifie un groupe terminal réactif ou non réactif qui est lié par covalence au polymère,
m signifie un nombre entier de 1 à 4000,
n signifie un nombre entier de 1 à 4000,
g signifie un nombre entier d'au moins 1,
h signifie un nombre entier de 0 à 40,
i signifie un nombre entier de 0 à 30 et
j signifie un nombre entier supérieur à 0,
dans lequel
dans une première étape, on forme une solution ou une suspension du composé siliconé S dans un mélange de solvant L1 et de solvant L2,
dans une deuxième étape, la solution ou la suspension est mise en forme,
dans une troisième étape, le solvant L1 est éliminé de la solution ou de la suspension jusqu'à ce que la solubilité du composé siliconé S passe sous la solubilité dans le mélange du solvant L1 et du solvant L2, une phase A riche en composé siliconé S et une phase B pauvre en composé siliconé S se formant et la formation de structure s'effectuant ainsi par la phase A et
dans une quatrième étape, le solvant L2 et les restes du solvant L1 sont éliminés.

2. Procédé selon la revendication 1, dans lequel le point d'ébullition du solvant L1 à 1 bar est inférieur d'au moins 30° au point d'ébullition du solvant L2.

3. Procédé selon la revendication 1 ou 2, dans lequel le solvant L1 dans la troisième étape et le solvant L2 dans la quatrième étape sont éliminés par évaporation des solutions ou suspensions mises en forme.

4. Procédé selon les revendications 1 à 3, dans lequel le solvant L2 et les restes du solvant L1 dans la quatrième étape sont éliminés par une extraction avec un autre solvant des solutions ou suspensions mises en forme.

5. Corps façonné poreux mince en composé siliconé S, pouvant être préparé selon le procédé selon la revendication 1 à 4.

6. Utilisation des corps façonnés selon la revendication 5 en tant que membranes.
